# EUROPEAN PATENT APPLICATION

(11) **EP 2 157 049 A1**
(43) Date of publication of application: **24.02.2010**
(21) Application number: 08703357.7
(22) Date of filing: 17.01.2008
(51) Int. Cl.: C01B 31/02, A62D 3/40, B09B 3/00, C04B 35/52, A62D 101/41, C08J 11/12

(54) **CARBON/ALUMINUM COMPOSITE COMPOUND AND INORGANIC COMPOUND COATED WITH CARBON/ALUMINUM COMPOSITE COMPOUND**

(30) Priority: 14.05.2007 JP 2007153344
(71) Applicant: HI-VAN Corporation, 429 Imahira-Machi Hakusan-shi Ishikawa 924-0827 (JP)
(72) Inventor: SUGIYAMA, Osamu, Hakusan-shi Ishikawa 924-0827 (JP)
(74) Representative: von Kreisler Selting Werner
(86) International application number: PCT/JP2008/050502
(87) International publication number: WO 2008/139747

(57) **Abstract**

The present invention provides a method capable of inexpensively obtaining a novel complex compound excellent in heat resistance, light-weight property, flame resistance, chemical resistance, and electroconductivity, and of converting a chemically harmful or morphologically hazardous substance into a detoxified/safened substance by a safe operation. Further, it is possible to simultaneously obtain a structural body where the detoxified/safened inorganic compounds have surfaces coated with the complex compound, so that application of the above method to a treatment of wastes allows for contribution to resource recycling.

The present invention also resides in: a carbon/aluminum complex compound produced by distillingly removing a water content from an aqueous dispersion containing a polyaluminum chloride and a water-soluble organic substance, and firing the remainder at a temperature of 300°C or higher; a carbon/aluminum complex compound-coated inorganic compound structural body produced by impregnating a water solution containing a polyaluminum chloride and a water-soluble organic substance, through inorganic compound particles, and by firing the impregnated matter; and a treating method of waste, comprising the steps of peeling off a waste containing needle-like inorganic compounds while spraying a water solution of polyaluminum chloride onto and through the waste, infiltrating a water-soluble organic substance into the sprayedly peeled matter, and subsequently firing the resultant matter.

## Description

### TECHNICAL FIELD

The present invention relates to a carbon/aluminum complex compound and a carbon/aluminum complex compound-coated inorganic compound, as well as a waste treating method by which such a compound is resultingly produced.

### BACKGROUND ART

Although various compositions having some heat resistance have been known, they have not been fully satisfied yet in terms of heat resistance. Further, substantially no compositions have been known, which possess flame resistance and electroconductivity in addition to heat resistance and which are also advantageous in cost. For example, although graphite as one kind of carbon compounds has a higher heat resistance, it is combusted by heating at temperatures of 500°C to 700°C or higher in air, so that it has failed to simultaneously possess heat resistance and flame resistance. In turn, metals, alloys, and the like typically have flame resistance but are inferior in heat resistance. In this respect, although metals such as platinum and tungsten simultaneously possess flame resistance and heat resistance, they have higher densities to thereby fail to contribute to decreased weights, and they are of course extremely disadvantageous in cost.

Meanwhile, it has become recently and increasingly important to treat and detoxify/safen wastes. Particularly, further progresses are desired for disposal treatments of needle-like inorganic compounds (inorganic fibers) such as: asbestos (various asbestos such as chrysotile, crocidolite, and the like) which are fearedly called devil minerals or silent time bombs; synthetic xonotlite; and glass fibers; such as because they are apt to fly off during disposal treatments, and it is difficult to convert their needle-like shapes exhibiting hazardousness into shapes which do not exhibit hazardousness.

Particularly, asbestos wastes are problematic on a global scale and are said to lead to serious problems in the future unless promptly solved, such that an annual disposal treatment amount of 1,000,000 tons is also predicted in Japan. In this respect, examples of known techniques for treating flyable asbestos wastes include a technique to bring them into slags by plasma melting at high temperatures of 1,500°C or higher, and a technique for safening them at 700°C by using a halogen compound. However, such techniques have required extensive energies or have been mere reuse of conventional reactions for harmful materials, and none of them has been excellent in cost performance, safety, and the like.

Further, although the synthetic xonotlite as an alternative to asbestos does not cause mesothelioma unlike asbestos, the synthetic xonotlite is inferior in bondability and thus fibers thereof at an obverse surface layer easily depart therefrom such that the departed fibers float in air and are likely to be sucked by persons, resulting in an increased possibility that earlier occurrence of health hazard is brought to be found out in the near future. As such, an improved technique is also desired for the problem of its disposal treatment, from now on.

In turn, although glass fibers are not so floating in air, some of them bring about adverse effects such as prickling and itchy feeling, on waste treating operations. Namely, also for "GFRP as composite material comprising unsaturated polyester containing glass fibers dispersed therein" which is frequently used as a material of watercraft, septic tank, bath, or the like, no techniques have been found for treating wastes thereof, so that it is also desired to promptly solve this problem of disposal treatment of glass fibers.

Meanwhile, although polyaluminum chlorides have been mainly known as water quality improving materials, they have been substantially hardly adopted in usage to produce a heat-resistant composition, a flame-resistant composition, and the like by firing, from the first. Although Patent Document 1 and Patent Document 2 describe water quality improving materials each obtained by firing a kneaded substance containing polyaluminum chloride and soil, the descriptions are not provided to obtain useful matters such as heat-resistant compositions containing carbon and are not related to treatment of wastes.

In turn, those techniques are known from Patent Document 3 to Patent Document 5, which are configured to treat wastes by using polyaluminum chlorides and to be accompanied by firing. However, these techniques are all related to methods for drying and treating sludge (polluted mud) wastes in a manner to use polyaluminum chloride as a coagulant and to fire the sludge obtained by aggregation, and thus the techniques are not related to treating methods for typical wastes nor treating methods for needle-like inorganic compounds having hazardousness. Moreover, those substances to be produced by the treatments never contain carbon, and thus the techniques are not intended to obtain useful compositions having excellent heat resistance, flame resistance, electroconductivity, and the like to thereby reuse the resources.

Thus, there have been recently desired a technique excellent in treatment of toxic wastes, and a technique capable of effectively utilizing substances produced by such a treatment from a standpoint of resource recycling as well as a standpoint of decreased cost of the treatment.

Patent Document 1: JP06-304472A
Patent Document 2: JP2000-325781A
Patent Document 3: JP06-090616A
Patent Document 4: JP2003-019500A
Patent Document 5: JP2005-254195A

### DISCLOSURE OF INVENTION

### PROBLEM TO BE SOLVED BY THE INVENTION

The present invention has been carried out in view of the state of art, and it is therefore an object of the present invention to relatively inexpensively obtain a compound which is excellent in: heat resistance; flame resistance; chemical resistances against acids, alkalis, organic solvents and the like; electroconductivity; light-weight property; and the like; a composition containing such a compound; and the like. It is another object of the present invention to provide a treating method for converting a chemically harmful substance, a morphologically hazardous substance, and the like into harmless substances by a safe operation. It is a further object of the present invention to provide a waste treating method which also contributes to resource recycling.

### MEANS FOR SOLVING PROBLEM

The present inventors have earnestly and repetitively conducted investigations so as to solve the above problems, and have narrowly completed the present invention by resultingly finding out that: it is possible to exemplarily obtain a complex compound excellent in heat resistance, flame resistance, chemical resistance, electroconductivity, light-weight property, cost performance, and the like, and to obtain a composition containing such a complex compound, by adopting a specific water-soluble alkali compound and an organic compound as a carbon source, and by firing them. Further, the present inventors have narrowly completed the present invention by finding out that it is possible to readily detoxify/safen a harmful substance, by adopting a specific water-soluble alkali compound and an organic compound as a carbon source, permeating them through the harmful substance, and firing the resultant matter.

Namely, the present invention provides: a carbon/aluminum complex compound **characterized in that** the carbon/aluminum complex compound is produced by firing a water solution containing a polyaluminum chloride and an organic substance at a temperature of 260°C to 2,800°C; and a heat-resistant composition **characterized in that** the heat-resistant composition contains such a carbon/aluminum complex compound.

Further, the present invention provides: a carbon/aluminum complex compound-coated inorganic compound structural body **characterized in that** the carbon/aluminum complex compound-coated inorganic compound structural body is produced by impregnating a water solution containing a polyaluminum chloride and an organic substance, through inorganic compound particles or through a composite containing inorganic compound particles, and by firing the impregnated matter at a temperature of 260°C to 2,800°C; and a heat-resistant composition **characterized in that** the heat-resistant composition contains such a carbon/aluminum complex compound-coated inorganic compound structural body.

Furthermore, the present invention provides a treating method of waste, **characterized in that** the method comprises the steps of: peeling off a waste containing needle-like inorganic compounds while spraying a water solution containing a polyaluminum chloride onto and through the waste; infiltrating an organic substance into the sprayedly peeled matter; and subsequently firing the resultant matter at a temperature of 260°C to 2,800°C.

Moreover, the present invention provides a mineral fiber carbonizing method **characterized in that** the method comprises the steps of: permeating a polyaluminum chloride and an organic substance through mineral fibers, to fixate the former to the latter; and firing the resultant matter.

Further, the present invention provides an inorganic compound carbonizing method **characterized in that** the method comprises the steps of: permeating, a mixture of an organic carbon compound such as a sugar component with a PAC and a fireproof agent such as borax blended in the organic carbon compound, through inorganic particles, to fixate the mixture thereto; and firing the resultant matter.

Furthermore, the present invention provides a method for carbonizing a hydrocarbon compound such as plastics **characterized in that** the method comprises the steps of: coating a treatment agent comprising a highly viscous hydrocarbon compound water solution mixed with a flame retardant and a fireproof agent, onto a surface layer of a hydrophobic plastic material to shield it from oxygen; and firing and carbonizing the resultant matter.

### EFFECT OF THE INVENTION

According to the present invention, it becomes possible to extremely inexpensively obtain a novel complex compound which is excellent in heat resistance, light-weight property, and the like, a novel composition containing such a complex compound, and the like. Further, it becomes possible to obtain a novel complex compound which is excellent in flame resistance, chemical resistance, electroconductivity, and the like.

Further, it becomes possible to provide a method for converting a chemically harmful or morphologically hazardous substance into a harmless/safened substance by a safe operation. At that time, it is further possible to obtain a more excellent structural body by coating at least a surface of the detoxified/safened inorganic compound with the complex compound. It is possible to apply the above method to treatment of wastes to thereby obtain the above-mentioned compound, composition, or structural body, thereby also contributing to resource recycling.

According to the present invention, it is possible to reproduce flyable asbestos fibers, which are called silent time bombs, into high-temperature oxidation resistant carbonaceous particles as valuable substances. This enables to solve health problems. It is thus possible to decrease the number of specially controlled landfills. In turn, the method establishes a technique to permeate and diffuse an organic carbon compound into an asbestos fiber tissue having a very excellent property against heat, i.e., establishes a harmless carbonizing treatment method. It is further possible to select a safe and appropriate chemical substance adapted to assist in thermal decomposition, in consideration of energy-saving. This fundamental carbonizing operation technique can be effectively used to carbonize not only flyable fibers but also most of industrial wastes, into valuable substances.

It is also possible to recycle wastes of GFRP (comprising unsaturated polyester as matrix, and glass fibers therein) and the like, as effective carbon materials by the carbonizing treatment method embraced in the scope of the present invention. The industrial waste carbonizing method embraced in the scope of the present invention is capable of bringing flyable asbestos into carbonaceous particles and safening them, at decreased energies. Additionally, it is possible to recycle plastics such as fishing nets, styrols, and liquid rubbers, and the like into carbonized compositions, and to reproduce and effectively utilize them as valuable substances. The carbon/aluminum complex compound of the present invention is incombustible to such an extent to defy the common knowledges about carbons up to now, and is a light-weighted and high-temperature oxidation resistant, heat insulating carbon having a unique structure.

### BRIEF DESCRIPTION OF DRAWINGS

FIG. 1 is a photograph of a carbon/aluminum complex compound-coated inorganic compound structural body obtained in Example 9, taken by a phase contrast microscope set at a refractive index n_{D}^{25°C}=1.550 and a magnification of 100;
FIG. 2 is a photograph of a carbon/aluminum complex compound-coated inorganic compound structural body obtained in Example 14, taken by a phase contrast microscope set at a refractive index n_{D}^{25°C}=1.550 and a magnification of 100;
FIG. 3 is a powder X-ray diffraction pattern of the carbon/aluminum complex compound-coated inorganic compound structural body obtained in Example 9, using Cu-Kα line; and
FIG. 4 is a powder X-ray diffraction pattern of the carbon/aluminum complex compound-coated inorganic compound structural body obtained in Example 14, using Cu-Kα line.

### BEST MODE(S) FOR CARRYING OUT THE INVENTION

The present invention will be explained hereinafter without limited to the following embodiments, and the present invention can be practiced by arbitrarily modifying them.

### <Carbon/aluminum complex compound>

The present invention relates to a carbon/aluminum complex compound obtained by firing a water solution containing a polyaluminum chloride and an organic substance. Here, the "water solution" may be an aqueous dispersion containing water-insoluble matters therein.

Herein, the "polyaluminum chloride" refers to a substance represented by a formula of [Al₂(OH)ₙCl₆₋ₙ]ₘ (1<n<5) which is a multinuclear complex of aluminums bridged by OH, as well as to a water solution containing it as a main component. Although the production method thereof is not particularly limited, it is a preferable method to dissolve aluminum hydroxide in hydrochloric acid, and to add thereto a sulfate group as a polymerization promoter to conduct a reaction, under pressure, and with addition of a dissolution aid as required. The dissolution aid, polymerization promoter, and the like are not particularly limited, insofar as the effect of the present invention is not affected. In the above formula, "m" is preferably 10 or less. Note that the aforementioned water solution is abbreviated to "PAC" hereinafter, in some cases. Preferably usable in the present invention is a generally and commercially available "polyaluminum chloride" or "PAC" for water purification or waste water treatment. Although the content of aluminum in the PAC to be used is not particularly limited, the content is preferably 3 to 30 mass%, more preferably 5 to 20 mass%, and particularly preferably 8 to 15 mass%. Note that it can also be used by further addition of water thereto, in an appropriate manner.

The above-described "organic substance" is indispensable as a carbon source of the carbon/aluminum complex compound of the present invention. Although the "organic substance" is not particularly limited, those organic substances which are liquid at an ordinary temperature or those water-soluble organic substance to be described later are preferable in that they are apt to disperse or dissolve in an aqueous dispersion containing polyaluminum chloride. Solid organic substances can also be used as the "organic substance". For example, when the present invention is to be applied to a "treating method of waste containing needle-like inorganic compounds" to be described later, resins including the needle-like inorganic compounds dispersed therein are also preferable as the "organic substance". Examples of such resins include a (meth)acryl resin, polyester resin, epoxy resin, vinyl ester resin, and the like containing asbestos, glass fibers, or the like dispersed therein.

Even water-insoluble ones, among the organic substances which are liquid at an ordinary temperature, readily dissolve or disperse in a PAC, in the presence of one or more kinds of particles selected from a group consisting of carbon particles, clay mineral particles, borax, and woody particles, or in the presence of inorganic compound particles such as asbestos. Further, even nonpolar organic substances exhibiting extremely high water repellency can be readily dissolved or dispersed in a water solution of alkali such as sodium hydroxide, or in a mixed solution of water and alcohol such as ethanol. Thus, it is also preferable to blend an alkali compound such as sodium hydroxide, an alcohol such as ethanol, and the like, into the solution.

In addition to those ones among the "water-soluble organic substances" to be described later which ones are liquid at an ordinary temperature, examples of the "organic substances which are liquid at an ordinary temperature" include: ketones such as methyl isobutyl ketone, dibutyl ketone, and cyclohexanone; esters such as ethyl acetate, butyl acetate, and ethyl butyrate; long chain fatty acid esters such as lauric ester, and linoleic ester; plant oils; animal oils; chlorine-containing hydrocarbons such as dichloromethane, chloroform, carbon tetrachloride, 1,2-dichloroethane, 1,1,1-trichloroethane, and 1,1,2-trichloroethylene; bromine-containing or iodine-containing hydrocarbons; aromatic hydrocarbons such as toluene, xylene, and naphthalene; deposits such as petroleum, coal, and coal tar, or fractions thereof; and the like. These substances are to be used solely in one kind, or mixedly in two or more kinds.

Surprisingly, even those organic substances, which are insoluble in pure water, dissolve or homogeneously disperse in a water solution of polyaluminum chloride in some cases. It is thus possible to select "organic substances", in preferential consideration of physical properties such as flame resistance and heat resistance of "carbon/aluminum complex compounds" or "carbon/aluminum complex compound-coated inorganic compound structural bodies" to be obtained by firing. To improve flame resistance of the substances to be obtained by firing, chlorine-, bromine- and/or iodine-containing hydrocarbons are particularly desirable. Particularly desirable examples of chlorine-containing hydrocarbons include those which dissolve or homogeneously disperse in a water solution of polyaluminum chloride.

"Solid organic substances" are not particularly limited in the present invention. Particularly preferably used are those in shapes of fragments, particles, or the like.

Desirable examples of "organic substances" include water-soluble organic substances, from standpoints of solubility in a water solution of polyaluminum chloride, environmental properties, and the like. Herein, the term "water-soluble" does not necessarily mean that an organic substance easily dissolves in water, and it is enough that even a slight amount of an organic substance substantially dissolves in water at an optimum temperature. Thus, it is possible for the "aqueous dispersion containing a water-soluble organic substance" to contain therein a part of the water-soluble organic substance dispersed therein, simultaneously with dissolution of the water-soluble organic substance. Although the "water-soluble organic substances" are not particularly limited because organic substances always contain carbon, examples of the water-soluble organic substances include: monosaccharides such as glucose, and fructose; disaccharides such as sucrose; polysaccharides such as starch; glycosides; sugar alcohols such as sorbit, and mannitol; monohydric alcohols such as methanol, ethanol, and propanol; polyhydric alcohols such as ethylene glycol, propylene glycol, glycerin, polyethylene glycol, and polypropylene glycol; water-soluble solvents such as acetone, and tetrahydrofuran; and water-soluble polymers such as polyvinyl alcohol, and polyvinyl pyrrolidone. These organic substances are to be used solely in one kind, or mixedly in two or more kinds.

Among them, saccharides such as glucose, fructose, sucrose, and starch, derivatives of the saccharides, and the like are exemplarily desirable in the points that they have higher boiling points and are thus easy to handle, they have higher solubilities in water, they exhibit higher safety, they are inexpensive, and they yield excellent carbon/aluminum complex compounds having lower specific gravities by firing. Although forms of the saccharides or derivatives thereof are not particularly limited, particularly desirable from the above points are: sugars such as white superior soft sugar, and soft brown sugar; starches derived from plants such as potatos, corns, or pastes based on starches; powders such as rice flour, glutinous rice flour, wheat flour, and corn flour; and potato starch.

The blending ratio between the PAC and the organic substance is not particularly limited insofar as they are blended in a manner to produce an excellent carbon/aluminum complex compound. Nonetheless, in case of a PAC having an aluminum content of 10 mass%, the content of organic substance is preferably 10 to 400 mass parts, more preferably 20 to 200 mass parts, and particularly preferably 30 to 100 mass parts, relative to 100 mass parts of the PAC. In cases of PAC's having aluminum contents different from 10 mass%, the blending ratios are to be set within desirable ranges which are increased or decreased proportionally to aluminum contents.

The production method of the aqueous dispersion containing the PAC and water-soluble organic substance is not particularly limited. However, in case that a water-soluble organic substance such as saccharide is poorly soluble in cold water, it is preferable to once dissolve the water-soluble organic substance in warm water and to subsequently mix the solution with the PAC. Further, in case of a treating method of waste to be described later, it is rather desirable to belatedly add a water solution of a water-soluble organic substance into a mixture of the wastes and the "PAC, or dilution of PAC with water", from the standpoints of: excellent operability; absence of contamination by the organic substance, at a place where the wastes are located; cost reduction; and the like. This is because, flying off of the wastes can be restricted by obtaining the mixture of "PAC, or dilution of PAC with water" and the wastes in a manner to spray the solution of the former to the latter, and the method configured to conduct the mixing in this order is particularly desirable in case that the wastes exhibit toxicity/hazardousness, flyability, or the like.

It is desirable to further contain, in the water solution containing the PAC and organic substance(s), one or more kinds of substances selected from a group consisting of carbon particles, carbon source particles, clay mineral particles, and borax. Particularly preferable as the carbon source particles are cellulose-based particles, or the like. Containing the carbon particles or carbon source particles extremely improves heat resistance, light-weight property, chemical resistance, electroconductivity, and the like, while containing clay mineral particles, borax, or the like extremely improves flame resistance, chemical resistance, and the like.

Examples of carbon particles exemplarily include charcoal, bamboo carbon, and examples of carbon source particles include: woody particles such as wood chips, shavings; papers such as waste papers, corrugated cardboards, and shredded papers; residues of soybean curd refuse; residues of corns, wheats, rice plants and the like; and cereal shells such as chaffs, and buckwheat chaffs. Further, desirable examples of clay mineral particles include particles of diatomaceous earth, zircon flour, bentonite, and porcelain clay. The clay mineral particles are particularly desirable, because elements such as Mg, Si, Al, Zr, and the like included therein are capable of further improving the heat resistance, chemical resistance, and the like when they are contained in the carbon/aluminum complex compound of the present invention.

When borax is contained, the borax is amalgamated and vitrified in a low-temperature region in a manner to shield oxygen, thereby enabling to facilitate carbonization and to provide a carbon/aluminum complex compound having an extremely higher flame resistance.

The above-described carbon source particles, clay mineral particles, and the like are frequently contained in wastes, and such components in the wastes enable to improve the above-described physical properties of the obtained carbon/aluminum complex compound. This allows for obtainment of a synergistic effect by virtue of the performance improving effect and the cost reduction effect based on treatment of wastes themselves.

The content of "one or more kinds of particles selected from a group consisting of carbon particles, carbon source particles, clay mineral particles, and borax" relative to a total amount of a water solution containing a PAC and an organic substance is not particularly limited. However, in case of carbon source particles, the content thereof is preferably 10 to 50 mass parts, more preferably 25 to 35 mass parts, and particularly preferably 27 to 32 mass parts, relative to 100 mass parts as a total amount of the PAC (aluminum content of 10 mass%) and an organic substance. In case of clay mineral particles, the content thereof is preferably 100 to 400 mass parts, and particularly preferably 200 to 300 mass parts. In case of borax, the content thereof is preferably 1 to 20 mass parts, more preferably 2 to 10 mass parts, and particularly preferably 5 to 6 mass parts. The preferable ranges are increased or decreased proportionally to aluminum contents in the PAC's.

It is also possible to blend additional substances other than those described above, into a water solution containing a PAC and an organic substance. Examples of such additional substances include: (hydrogen)phosphates such as diammonium hydrogenphosphate, and sodium hydrogenphosphate; (bi)carbonates such as ammonium bicarbonate, sodium bicarbonate, and sodium carbonate. These substances are each to be fired together with a polyaluminum chloride to exemplarily promote carbonization and to further promote a heat resistance of a resultant carbon/aluminum complex compound, and are thus each extremely effective as an adjuster of a pH value.

The blending amount of (hydrogen)phosphate or (bi)carbonate is preferably 10 to 200 mass parts, more preferably 25 to 100 mass parts, and particularly preferably 30 to 70 mass parts, relative to 100 mass parts of a water solution containing a PAC (aluminum content of 10 mass%) and an organic substance.

In the treating method of waste to be described later, the "dispersion containing a polyaluminum chloride and an organic substance" may contain additional components included in wastes. These "additional components" are to be contained at such an extent that the physical properties of the carbon/aluminum complex compound are not considerably deteriorated. The "additional components" are not particularly limited, and specific examples thereof include a binder resin in case that needle-like inorganic compounds such as asbestos, synthetic xonotlite, glass fibers, or the like are used as a filler. Examples of such a binder resin include organic resins such as: thermosetting resins such as unsaturated polyester resins, phenol resins, and epoxy resins; and thermoplastic resins such as acrylic resins, polyester resins, and polyvinyl resins. It is frequently preferable to contain these organic resins, because they are integrated during firing to thereby act as carbon sources.

The carbon/aluminum complex compound of the present invention is obtained through a firing step, while adopting the "aqueous dispersion containing a polyaluminum chloride and a water-soluble organic substance" as a starting material. Although distillation removal of water may be conducted during the firing step, it is also preferable to distillingly remove water according to a usual manner prior to the firing.

Examples of firing methods include a method for firing a starting material by leaving it to stand still within a furnace, a method for directly contacting a flame with a starting material, a method for supplying a starting material into a continuous firing furnace, and a method based on a scheme to drop a starting material into a furnace by a slider. Preferable among them is the method for directly contacting a flame with a starting material by a cup burner, from a standpoint of thermal efficiency. Although a combustion gas in the method for direct contact of flame is not particularly limited, preferable examples thereof include hydrogen, methane, ethane, propane, butane, carbon monoxide, and town gas.

It is essential that the firing is conducted in a temperature range of 260°C to 2,800°C. The firing temperature is preferably within a range of 400°C to 2,000°C, more preferably within a range of 600°C to 1,800°C, particularly preferably within a range of 700°C to 1,500°C, and further preferably within a range of 800°C to 1,000°C. Further, the firing atmosphere is not particularly limited, and the firing may be conducted in any one of: in vacuum; in an inert gas such as nitrogen, argon, or the like; in an active gas such as air, oxygen, or the like; and the like. Since carbon in the carbon/aluminum complex compound is never combusted in the present invention even by conduction of firing in air, it is preferable to conduct firing in air from a viewpoint of a facilitated operation. The firing temperature in the method of direct contact of flame is measured by inserting a sensor prove of a thermocouple radiation thermometer (having a sheath size of φ8×500 mm, for example) into a target, and the aforementioned firing temperature in the present invention is defined as being measured in such a manner.

Although periods of time for firing are not particularly limited, the firing period is preferably 10 to 60 minutes, more preferably 15 to 40 minutes, and particularly preferably 20 to 25 minutes in the method to leave a starting material to stand still within a furnace to fire the material. Further, the firing period in the method of direct contact of flame is preferably 2 minutes to 30 minutes, more preferably 3 minutes to 20 minutes, and particularly preferably 5 to 10 minutes.

Note that the firing may be conducted in an oxidative atmosphere such as in the presence of oxygen, or may be conducted in a non-oxidative atmosphere. In case of firing in an oxidative atmosphere, carbon/aluminum complex compounds colored in black are produced at firing temperatures of 800°C or lower. Further, in case of firing in a non-oxidative atmosphere, carbon/aluminum complex compounds colored in white are produced at firing temperatures of 300 to 1,200°C. It is most preferable to conduct firing within the above temperature ranges in the oxidative atmosphere and the non-oxidative atmosphere, respectively.

It is preferable that the carbon/aluminum complex compound obtained by firing is cracked or pulverized into a particulate or powder form, as required, from a viewpoint of facilitated handling. Although the obtained "particulate or powdery carbon/aluminum complex compound" is typically black in color, even gray or colorless (including white) substances are embraced within the scope of the present invention. Although the reason of black color is assumed to be caused by a condensed polycyclic structure to be produced by carbonization, the present invention is not limited thereto.

The "carbon/aluminum complex compound" of the present invention is not particularly limited in terms of its specific composition, a specific structure, and the like. The carbon moiety may have been made into a black lead (graphite) structure by carbonization, or may be a carbon precursor at an intermediate stage thereof. The chemical bonding state, physical blending state, and the like of the aluminum are not clarified, and thus such factors are not particularly limited. Note that although the carbon/aluminum complex compound of the present invention has been defined as an article based on the applicable production method thereof because the carbon/aluminum complex compound has not been clarified in structure and thus the carbon/aluminum complex compound can be specified only by the applicable production method, those substances produced by any arbitrary production methods can be embraced within the scope of the carbon/aluminum complex compound of the present invention insofar as such substances can be produced by the applicable production method. Nonetheless, it is preferable that the carbon/aluminum complex compound of the present invention is produced by the applicable method, from standpoints of readiness of the production method, and applicability thereof to the treating method of waste to be described later.

### <Carbon/aluminum complex compound-coated inorganic compound structural body>

Those articles, which have been obtained by impregnating the aforementioned "water solution containing a polyaluminum chloride and an organic substance" into inorganic compound particles or into a composite containing inorganic compound particles followed by firing by the aforementioned method, are also excellent in heat resistance, light-weight property, flame resistance, chemical resistance, electroconductivity, and the like. This "carbon/aluminum complex compound-coated inorganic compound structural body" may have such a structure: that the carbon/aluminum complex compound is coated on a periphery of a chemically and/or morphologically changed "inorganic compound" through firing of the "inorganic compound particles or the composite containing inorganic compound particles"; or that the "water solution containing a polyaluminum chloride and an organic substance" has permeated through the inorganic compound particles, and they are simultaneously fired in this state to thereby produce a unique "inorganic compound". Further, both structures may be combined, i.e., the structural body may have such a structure that inorganic compound particles acting as nuclei have been denatured and these particles simultaneously have coated structures.

The inorganic compound particles are not particularly limited in terms of kind and shape. Examples of kinds include calcium carbonate, barium sulfate, talc, inorganic coloring pigments, asbestos, synthetic xonotlite, and glass fibers (including glass wool). When the present invention is applied to a treating method of waste, it is particularly preferable to adopt, as the inorganic compound particles, the aforementioned general-purpose fillers typically contained in resins.

Further, although the shapes of particles may be either needle-like or non-needle like, needle-like shapes are preferable because the aforementioned effects (safening by restricting the flying off of hazardous particles) of the present invention can be effectively exhibited when particles of such shapes are subjected to the treating method of waste. The inorganic compound particles are preferably needle-like inorganic compounds, and such needle-like inorganic compounds are more preferably asbestos, synthetic xonotlite, or glass fibers (including glass wool). Although kinds of asbestos are not particularly limited, it is preferable to utilize: serpentine based asbestos such as chrysotile (chrysotile asbestos, white asbestos); and hornblende based asbestos such as crocidolite (blue asbestos), amosite (brown asbestos), anthophyllite, tremolite, and actinolite.

When needle-like inorganic compounds are impregnated with the "water solution containing a polyaluminum chloride and an organic substance" followed by firing, the needle-like shapes are broken at several locations in longitudinal directions into non-needle-like shapes, respectively. In turn, the fiber tissues of the needle-like inorganic compounds are brittle, so that the particle shapes having sharp tip ends are brought into shapes having rounded tip ends after firing. These two kinds of phenomena are caused solely or combinedly, thereby eliminating hazardousness having been caused by shapes such as tip end shapes of needle-like inorganic compounds.

Although the principles of breaking and/or rounding phenomena have not been clarified yet, it is assumed that the "water solution containing a polyaluminum chloride and an organic substance" deeply permeates into interiors of needle-like inorganic compounds, one needle by one needle, and such hygroscopic needle-like particles are simultaneously fired in an atmosphere of oxygen, so that the absorbent needle-like particles are broken.

Magnesium (Mg), silicon (Si), and the like contained in the inorganic compound particles are brought into the carbon/aluminum complex compound, to thereby improve a heat resistance thereof. Since magnesium (Mg) and silicon (Si) are contained in asbestos, application of the present invention to a disposal treatment of asbestos is preferable in double meaning, because a carbon/aluminum complex compound, a carbon/aluminum complex compound-coated inorganic compound structural body, or the like which has been further improved in heat resistance by virtue of containment of the elements, can be obtained then simultaneously with the safening treatment of hazardous particles.

Examples of the "composite containing inorganic compound particles" include: composites containing inorganic fillers for various purposes, and binder resins, respectively; and earth media containing soils including plant-derived organic substances such as leaf mold, and inorganic compound particles, respectively. Specifically, examples thereof include: "composites (hereinafter called "GFRP") containing setting resins, and glass fibers dispersed therein" which are generally used as materials of watercrafts, septic tanks, baths, for example; "composites containing mortar or the like and asbestos dispersed therein" which are used as materials for construction materials, asbestos slates, and high-temperature pipings; "composites containing resins, and particles such as calcium carbonate, barium sulfate, talc, inorganic coloring pigments, aluminum oxide, or aluminum hydroxide dispersed therein" which are generally used to whiten or color coating materials, adhesives, and the like; "composites containing resins, and particles such as barium sulfate, talc, or inorganic coloring pigments dispersed therein" such as circuit board materials; and the like.

It is a particularly preferable situation that the "composite containing inorganic compound particles" is contained in a waste, because it becomes possible then to simultaneously achieve a treatment of the waste, and a resulting obtainment of a carbon/aluminum complex compound-coated inorganic compound structural body.

In the production process of a carbon/aluminum complex compound-coated inorganic compound structural body, adverse effects are scarcely caused even by the presence of the binder resin contained in the composite, and the binder resin is rather effectively utilized as a carbon source in the process to produce the carbon/aluminum complex compound-coated inorganic compound structural body. Namely, in the treating method of waste to be described later, it is typically unnecessary to previously and separately remove the binder resin contained in the composite.

Although the content of inorganic compound particles relative to a total amount of a polyaluminum chloride and an organic substance is not particularly limited, the content of inorganic compound particles is preferably 10 to 400 mass parts, more preferably 20 to 200 mass parts, and particularly preferably 30 to 100 mass parts, relative to the above noted total amount of 100 mass parts. Excessively higher contents of inorganic compound particles occasionally results in that the particles are not subjected to permeation therethrough of a polyaluminum chloride and a water-soluble organic substance in sufficient amounts, respectively, thereby leading to insufficient coatings. In turn, excessively lower contents of inorganic compound particles occasionally fail to exhibit the properties of the carbon/aluminum complex compound-coated inorganic compound structural body.

It is preferable in the present invention to use needle-like inorganic compounds as the "inorganic compound particles", and when asbestos is used as the needle-like inorganic compounds, the content of the asbestos relative to a total amount of a PAC and a water-soluble organic substance is preferably 10 to 200 mass parts, more preferably 15 to 100 mass parts, and particularly preferably 20 to 50 mass parts, relative to 100 mass parts as the total amount of the PAC (aluminum content of 10 mass%) and the organic substance. The above ranges are to be increased or decreased proportionally to aluminum contents in the PAC's.

### <Treating method of waste>

One aspect of the present invention embraces a treating method of waste **characterized in that** the method comprises the steps of: peeling off a waste containing needle-like inorganic compounds while spraying a water solution containing a polyaluminum chloride onto and through the waste; infiltrating a water-soluble organic substance into the water solution sprayed onto and through the waste, to thereby bring the water solution into an aqueous dispersion; distillingly removing a water therefrom; and firing the remainder at a temperature of 300°C or higher.

Although needle-like inorganic compounds are sometimes hazardous and/or flyable, flying off of the harmful materials is restricted by spraying a water solution containing a polyaluminum chloride onto and through them, thereby avoiding influences on health of an operator. This allows for maximum exhibition of such a property of polyaluminum chloride that the same is not dried in an environment of ordinary temperature. It is also preferable that such a water solution contains the aforementioned substance(s), in addition to the polyaluminum chloride. In case that a saccharide is to be contained in the water solution, the former is not required to be coated together with the latter upon the operation for removing the harmful material while avoiding flying off thereof, and it is preferable from a standpoint of simplified operation to add the saccharide into the water solution upon a safening treatment at a low-temperature for a short time. Further, although it is possible to previously contain the water-soluble organic substance in the water solution to be sprayed onto and through a waste, it is preferable to belatedly add the water-soluble organic substance into the water solution having been sprayed onto and through the waste and thus containing the waste, from standpoints of complete safening and improved workability.

It is preferable to appropriately and dilutingly decrease the viscosity of the water solution in a manner to allow for preferable spraying for the removal. The water solution to be sprayed is to be preferably prepared by adding 5 to 30 mass parts of water, and particularly preferably 10 to 15 mass parts of water, into 100 mass parts of a commercially available PAC (aluminum content of 10 mass%). The above ranges are to be increased or decreased proportionally to aluminum contents in the PAC's.

As a permeating/immobilizing treatment agent for flyable asbestos which have not been dismounted yet at present, it is also possible to spray, thereonto and therethrough, a composite treatment agent as a fly-off preventive permeating/immobilizing treatment agent comprising an XSP to be described later and a dispersion X to be described later. The asbestos immobilized and dismounted by the permeating spray operation are easily converted into carbonaceous compounds by a firing operation.

Namely, one embodiment of the present invention resides in a mineral fiber carbonizing method **characterized in that** the method comprises the steps of: permeating a polyaluminum chloride and an organic carbon compound such as a glucide solution through mineral fibers, to fixate the former to the latter; and firing the resultant matter.

The carbonizing treatment agent is a material which is highly safe and inexpensive. Accordingly, it has a higher advantage in cost, in a manner to save an amount of starting material by virtue of the feature to reproduce and recycle a source and to additionally restrict an amount of waste occurrence to a minimum as compared to conventional schemes, to thereby resultingly and remarkably decrease an environment load and a cost for landfill disposal of wastes.

Recently, much attention has been directed to recycling of plastic products. It is more difficult to conduct recycling of finally consumed wastes than to conduct recycling of wastes during a production process, in a manner that the former wastes have been contaminated by various substances in the steps of collection, classification, and separation, and such contamination can not be prevented insofar as by a simple and easy method, so that this problem has not been solved yet. In the event that a carbonizing furnace plant system adopting the carbonizing treatment method as one embodiment of the present invention is operated, all the wastes converted into carbides by firing without any damages to the carbonizing furnace can be used as recycled resources which are pyrolytically decomposed heat-resistant carbon materials. Further, incineration ashes to be exhausted from incinerators, melting furnaces, and the like in conventional systems and to be landfilled, can also be expected to be variously utilized, as heat-resistant materials which are carbon-carrying ceramics obtained by injecting carbons into the incineration ashes by a treatment based on the XSP of the present invention to be described later.

As a substance suitable for the treating method to carbonize asbestos, synthetic xonotlite, glass fibers, glass wools, and the like, there have been found out sugars including many carbon components which will possibly act as extremely effective nuclei. Sugars are substances each comprising mutually bonded dextrose and fructose, and are food products to be daily and typically used by people, such that the sugars act as substances which satisfactorily permeate through material tissues to thereby operatively exhibit extremely superior osmotic pressures. Further, it has been confirmed by experiments that complexation of sugars as aids with polyaluminum chloride, borax, and the like is effective for an early carbonizing method. The polyaluminum chloride is an agglomerative water purifying agent, and corresponds to a JIS K1475-1978 polyaluminum chloride for water supply. It is also extremely effective to use, as a treatment agent, a complex compound comprising a starch based paste, borax, PAC, and a sugar content.

Namely, one embodiment of the present invention resides in an inorganic compound carbonizing method **characterized in that** the method comprises the steps of: permeating, a mixture of an organic carbon compound such as a sugar component with a PAC and a fireproof agent such as borax blended in the organic carbon compound, through inorganic particles, to fixate the mixture thereto; and firing the resultant matter.

1: A PAC and a high concentration gum syrup dissolve in each other, without separation. In turn, the mechanism of permeation and fixation is such that the PAC component as an inorganic polymer together with the sugar solvent permeate through interiors of the mineral fiber tissues and are fixated thereto mainly by an osmotic pressure effect of the sugar comprising dextrose and fructose solvents, and by a permeating and swelling effect of the PAC component, i.e., such that the organic carbon components are settled and fixed into the hygroscopic inorganic fiber components.
Further, the sugar components containing much combustible carbon mutually dissolve in the incombustible inorganic polymer PAC. By this effect, the sugar components are temporarily ignited and combusted but are not excessively combusted, such that the sugar components follow a charring process together with asbestos fibers containing the organic carbons in a manner to fragmentize the strong fiber tissues, so that all the fibers are converted into carbonaceous particles.

The PAC contains aluminum oxide as a main component as well as sulphate ions to thereby exhibit basicity, contains no flammable substances, and is amalgamated with and fixated to the carbonized asbestos in a state also combined with the aluminum oxide, upon firing for a short time at a high-temperature.
Pyrolytically decomposed carbons are inactive in vivo, and safen asbestos particles into carbonized ones in shapes different from fiber shapes. Thus, health hazard and environmental pollution due to flying off of fibers are fully avoided.
It is assumed that the novel carbonized material including silicon oxide, magnesium oxide, and the like having unique structures amalgamated with carbons pyrolytically decomposed together with silicon, magnesium compounds in inorganic minerals produced by the operation for permeating carbon components therethrough, has been established as a high-performance carbon material which is extremely excellent in high-temperature oxidation resistant property, by structural conversion. Further, in the reaction of the dispersion X, the asbestos in a state that a low molecular sugar component, a carbohydrate/borax, and the like are injected therein, is also thermally melted within a short time in a low-temperature range at about 760°C in the course through the step that the borax component vitrifies at about 760°C; and the fiber tissues are hardened and broken commensurately with temperature lowering after carbonization, and fully converted into carbonaceous particles. Only, excessively higher concentrations of the borax component inevitably result in deteriorated heat resistance of the obtained carbides.

2: As can be concluded from a case example that fiber tissues are loosened by a permeating effect of the acidic PAC component and the glucide based on permeation of the XSP, the carbon components are fixated to the vicinity of the surface layers of the fiber tissues even by a surface layer carbonizing method for glass fibers themselves. Thus, carbons are fixated to only the surface layers, by an operation to fire the tissues at a melting temperature of glass or lower. At this time, presence of a liquid substance of hydrocarbon compound results in a further extent of loosening to increase an extent of carbon fixation.

3: For carbonization of a GFRP, it is basically unnecessary to conduct permeation and injection of a carbon component such as a sugar component thereinto as a pretreatment because the GFRP is a hydrocarbon compound in itself, and those substances other than glass fibers are all carbonized without incineration, by an operation to form a simple oxygen shielding borax layer by borax as a flame-resistant compound and a PAC-containing starch layer at a resin surface layer, followed by firing in an oxidative atmosphere. Even when a flame is contacted with the GFRP in the state that the same is coatedly shielded from air by the carbohydrate containing an inorganic flame retardant and an inorganic incombustible substance, the GFRP does not combust immediately, and the resin is thermally melted only by heat conduction in an initial stage. The two kinds of flame retardants are also brought into states amalgamated into the resin simultaneously with this thermal melting, and only the amalgamated borax component partially shields oxygen by virtue of vitrification, so that the resin is carbonized in an atmosphere of a diluted oxygen concentration state.
Meanwhile, the carbonized resin, and a silane coupling agent are also fixated as carbons to the vicinity of surface layers of glass fibers mixed in the matrix.

Namely, one embodiment of the present invention resides in a method for carbonizing a hydrocarbon compound such as plastics **characterized in that** the method comprises the steps of: coating a treatment agent comprising a highly viscous hydrocarbon compound water solution mixed with a flame retardant and a fireproof agent, onto a surface layer of a hydrophobic plastic material to shield it from oxygen; and firing and carbonizing the resultant matter.

Meanwhile, the operational principle is not clear for the above phenomenon that, when needle-like inorganic compounds are impregnated with the above "water solution containing polyaluminum chloride and organic substance" followed by firing, the needle-like shapes are broken in longitudinal directions into non-needle-like shapes, and the fiber tissues of the needle-like inorganic compounds are made brittle, so that the particle shapes having sharp tip ends are brought into shapes having rounded tip ends after firing. However, such an operational principle is considered to be as follows, though the present invention is not limited thereto.

It is assumed that the "water solution containing a polyaluminum chloride and an organic substance" permeates through interiors of needle-like inorganic compounds one needle by one needle, and the thus combined substances are simultaneously fired, so that the needle-like particles are broken.

When the needle-like inorganic compounds are impregnated with a PAC water solution, the latter gradually permeates into the fiber tissues. For example, in case of adopting chrysotile as the needle-like inorganic compounds, the impregnating period is 10 days, and the content rate of the impregnant is 10.3 mass%. In case of the needle-like inorganic compounds, they are further decomposed during firing.

Shown hereinafter are an operation and a principle of decomposition of needle-like inorganic compounds by firing.
1. Glucides and starches, which melt and solidify at extremely lower temperatures, are produced in the fiber tissues.
2. Borax typically melts and solidifies as a vitreous substance in a temperature range of 760°C, or melts at a temperature lower than it, i.e., at about 500°C, by containing the melted, solidified, and carbonized glucides/starches (low-temperature melting) therein.
3. The aluminum component (10 to 11%) in the PAC and a small amount of borax component carbonize the aforementioned organic substance without incinerating it, to thereby exhibit fireproofing effects.

The following chemical reactions progress during firing in an oxidative atmosphere (lapse of time).
4. The asbestos mineral substance containing a large amount of PAC, a glucide, and a small amount of borax, is brought into a red-heated state from a temperature near 300 to 500°C in the furnace together with production of pyrolytically decomposed gases as the melting of the organic substance and borax component is progressed, and only the pyrolytically decomposed gas are perfectly combusted (smokeless).
5. The combustion of the pyrolytically decomposed gases is terminated in 2 to 5 minutes, and a pyroflame in a corona shape is produced thereafter. This pyroflame reaches a temperature of 950 to 1,050°C (flame producing time is 2 to 3 minutes).
6. Upon termination of the pyroflame, the target is changed from a red-heated color through a yellow-heated color to white-heated color, so that the firing is completed. Although the carbides after heat removal are particulate carbons and granular carbons, the latter are easily collapsed into fine particles at all by a slight stress.

### Examples:

Although the present invention will be more specifically explained with reference to Examples and Comparative Examples, the present invention is not limited to these Examples insofar as within the scope thereof.

### Example 1:

### <Carbon/aluminum complex compound>

25 mass parts of saccharose was heatedly dissolved in 25 mass parts of water at 50°C, and 50 mass parts of PAC ("PAC" (10 to 11 mass% as aluminum amount) made by Oji Paper Company, Limited) was then added into the solution, followed by stirring to homogeneously mix them. The water solution obtained in this way will be abbreviated to "XSP" hereinafter.

100g of XSP was poured into a vat, up to a thickness of 2 mm, and left to stand still at 20°C for 5 hours, followed by firing of the specimen by direct contact of a flame of 1,300°C from a burner with the surface of the specimen. The firing was conducted in air. The temperature measured by inserting a sheath of a K-type thermocouple thermometer into the vicinity of a surface layer of the specimen, was 750 to 880°C. In 20 minutes after starting of burner flame contact, a carbon/aluminum complex compound in a form of entirely uniform and black colored particles was obtained.

### Example 2:

### <Carbon/aluminum complex compound>

A carbon/aluminum complex compound was obtained in the same manner as Example 1, except that 25 mass parts of rice flour was used instead of 25 mass parts of saccharose in Example 1.

### Example 3:

### <Carbon/aluminum complex compound>

50 mass parts of XSP, 45 mass parts of borax, and 55 mass parts of water were homogeneously agitated and mixed with one another, to obtain a solution. 50g of this solution was poured into a vat, up to a thickness of 20 mm, and left to stand still at 20°C for 28 hours. Although microcrystals of borax were deposited at the surface of the solution, burner flame contact was started as it was, similarly to Example 1. Firing was conducted at 1,500°C for 5 minutes, to obtain a carbon/aluminum complex compound.

### Example 4:

### <Carbon/aluminum complex compound>

Similarly to Example 3, 50 mass parts of XSP, 45 mass parts of borax, and 55 mass parts of water were homogeneously agitated and mixed with one another, to obtain a solution. Further, 13 mass parts of bamboo carbon particles as carbon particles, and 12 mass parts of porcelain clay as clay mineral particles were blended into the solution, and homogeneously dispersed therein. The resultant solution was used in the same manner as Example 3, to obtain a carbon/aluminum complex compound.

### Example 5:

### <Carbon/aluminum complex compound>

A carbon/aluminum complex compound was obtained in the same manner as Example 1, except that a dispersion prepared by homogeneously mixing 50 mass parts of XSP and 30 mass parts of wood chips as woody particles was used.

### Example 6:

### <Carbon/aluminum complex compound-coated inorganic compound structural body>

100g of XSP was introduced into a stainless vessel, and 100g of asbestos fabric of 3 mm thickness was immersed thereinto. The fabric was pulled out after immersion at 20°C for 10 hours, and the excessive solution attached to the fabric was dropped off by gravity, followed by horizontal placement of the asbestos fabric permeated with the XSP onto an incombustible sheet. Flame from a burner was directly contacted with the surface of the asbestos fabric, to fire it. The firing was conducted in air. The temperature just below the contacted flame was measured by inserting a thermometer into a location which was 5 mm below the asbestos fabric. Firing was conducted at 1,200°C for 10 minutes, to obtain a carbon/aluminum complex compound-coated inorganic compound structural body, without thermal melting.

The asbestos particles were converted into particulate shapes, by this firing. Further, sharp portions thereof had disappeared and the particles had rounded tip ends. The obtained carbon/aluminum complex compound-coated inorganic compound structural body contained silicon and magnesium, in addition to aluminum and carbon.

### Example 7:

A carbon/aluminum complex compound-coated inorganic compound structural body was prepared in the same manner as Example 6, except that the specimen was introduced into a heating apparatus, the temperature in the heating apparatus was set at 800°C, and firing was conducted for 60 minutes, instead that the specimen was fired by directly contacting a flame therewith from a burner in Example 6. By this firing, the inorganic compounds derived from the asbestos were converted into particulate shapes. Further, sharp portions thereof had disappeared and the particles had rounded tip ends.

### Example 8:

### <Carbon/aluminum complex compound-coated inorganic compound structural body>

100 mass parts of borax and 300 parts of water were mixed with each other, followed by stirring with heating and boiling, to thereby obtain a homogeneous solution. Added into this solution was 5 mass parts of rice flour mixed with water, followed by adding and stirring of 120 mass parts of PAC, to obtain a dispersion X. This dispersion was increased in viscosity by the addition of PAC, and was gelated as the temperature lowered.

10 mass parts of the dispersion X was mixed with 40 mass parts of flyable asbestos (containing 10 mass% of chrysotile), and this mixture was contacted with flame in a wet state of the mixture. Firing was conducted in the same manner as Example 6 except the firing time, and a carbon/aluminum complex compound-coated inorganic compound structural body was obtained by burner flame contact for 20 minutes.

The inorganic compounds in the thus obtained carbon/aluminum complex compound-coated inorganic compound structural body had an averaged length extremely shorter than that before firing, so that the asbestos was converted into particulate shapes and thus safened. Further, sharp portions thereof had disappeared and the particles had rounded tip ends. The obtained carbon/aluminum complex compound-coated inorganic compound structural body contained silicon and magnesium, in addition to aluminum and carbon.

### Example 9:

### <Carbon/aluminum complex compound-coated inorganic compound structural body>

A carbon/aluminum complex compound-coated inorganic compound structural body was prepared in the same manner as Example 8, except that the XSP was used instead of the dispersion X. In the obtained carbon/aluminum complex compound-coated inorganic compound structural body, asbestos particles were broken and thus safened. Further, sharp portions thereof had disappeared and the particles had rounded tip ends. The obtained carbon/aluminum complex compound-coated inorganic compound structural body was abundant in oxygen, and contained silicon and magnesium, in addition to aluminum and carbon.

### Example 10:

40g of a waste (which had been used as a unit bath or the like, and hereinafter abbreviated to "GFRP") obtained by dispersing glass fibers in an unsaturated polyester and curing the dispersion and roughly crushed into sizes of about 30 to 40 mm, was immersed into an XSP in an amount sufficient for immersion for 3 minutes. The waste was pulled out, and the excessive solution attached thereto was dropped off by gravity, followed by placement of the GFRP permeated with the XSP onto an incombustible sheet. Flame from a burner was directly contacted with the surface of the GFRP, to fire it. The firing was conducted in air. The temperature just below the contacted flame was measured by inserting a thermometer into the GFRP. Firing was conducted at 1,000°C for 20 minutes, to obtain a carbon/aluminum complex compound-coated inorganic compound structural body.

Glass fibers in the GFRP were broken by firing to have an averaged length of 2 mm or shorter, and were each covered at a periphery with a carbon/aluminum complex compound. The unsaturated polyester was carbonized at all. The obtained carbon/aluminum complex compound-coated inorganic compound structural body contained sodium, in addition to aluminum and carbon.

### Example 11:

50g of glass fibers was placed onto an incombustible plate, and 100g of XSP was added thereto, followed by stirring by a spatula. Flame contact was conducted by using a burner, similarly to Example 10. Further, firing was conducted at 1,000°C for 20 minutes, to obtain a carbon/aluminum complex compound-coated inorganic compound structural body. During the firing, glass fibers were not melted. The carbon/aluminum complex compound-coated inorganic compound structural body did not bring about prickling and itchy feeling of a skin, which feeling was specific to glass fibers.

### Example 12:

20g of synthetic xonotlite was placed onto an incombustible plate, and 50g of XSP was added thereto, followed by stirring and mixing by a spatula. The XSP permeated into the synthetic xonotlite. Flame contact was conducted by using a burner, similarly to Example 10. The water was boiled, immediately after the flame contact. Further, firing was conducted at 1,000°C for 7 minutes, to obtain 26.3g of carbon/aluminum complex compound-coated inorganic compound structural body.

The inorganic substances derived from the synthetic xonotlite in the obtained carbon/aluminum complex compound-coated inorganic compound structural body had lost needle-like shapes, and had been brought into a mixed state of approximately spherical particles having an averaged particle diameter of 100 µm, and coarse particles having an averaged particle diameter of 1 mm to 1.5 mm.

### Example 13:

Shown below are main materials in case of a mineral fiber carbonizing method of the present invention:
Sugar (white superior soft sugar, soft brown sugar, or the like), polyaluminum chloride (PAC) which is the same as that used in Example 1, borax, and starch
Shown below is a weight ratio composition of components of a typical treatment agent to be used in the mineral fiber safening/carbonizing method:

(A) Fundamental weight ratio composition (hereinafter abbreviated to "carbonizing A agent")
   Preparation of a syrup of carbonizing A agent:
   Thermal dissolution of 1kg of sugar: 1kg of water is conducted to obtain a syrup of 50% concentration.
(B) 100 mass parts of the syrup of carbonizing A agent: 100 mass parts of PAC were blended (this mixture is called "XSP").

Experiment 1-A: As a material to be carbonized, an asbestos fabric having a thickness of 3 mm was selected.
A-1: The XSP in an appropriate amount was delivered into a nonpolar vessel or stainless vessel.
A-2: The specimen to be safened was introduced into the vessel, and immersed therein for about 12 hours.
A-3: After 10 hours, the specimen immersed and swollen with the lapse of time was pulled out.
Flame at 1,200°C was continuously irradiated to the specimen (oxidative atmosphere), for 8 minutes. The specimen was quickly carbonized without thermal melting.
Although this carbide was a solid matter, it was easily collapsed by additional and continuous heating for 2 minutes, and turned into granular carbons having particle lengths within 2 to 3 mm.
One embodiment of the present invention resides in an inorganic substance safening/carbonizing technique comprising the step of injecting a PAC and an organic carbon compound into a mineral fiber component.
The safened and carbonized ceramic obtained by this operation can be said to be an ultra-high temperature oxidation resistant pyro-carbon which contains silicon oxide/magnesium oxide/aluminum oxide/carbon and which can sufficiently withstand temperatures of 1,500°C±.

### Example 14:

Experiment 1-B: As a material to be carbonized, flyable asbestos fibers were selected.

### Preparation of carbonizing treatment agent B:

1. 300 parts of hot water was poured into 100 parts of borax, and the mixture was heated and boiled. While this borax water of 25% concentration was warm, 5 parts of rice flour mixed with water was added thereto together with stirring.
2. 120 parts of PAC was added to the mixture of 1. and agitated, and the viscosity of the resulting mixture was gradually increased and this mixture was gelated as the temperature lowered.

### (This composition is called a "dispersion X".)

40 parts of flyable asbestos (containing 10.3% of chrysotile): 10 parts of XSP: 50 parts of carbonizing treatment agent B were all mixed, and the mixture was brought into particulate carbides at all, by burner flame contact at 1,200°C for 20 minutes in the wet state of the mixture.
When drying of and immobilization for the mixture were conducted and then flame contact and carbonization were conducted thereto, the treatment time was shortened by about 10 minutes.

### Example 15:

Experiment 2: Selected as a material to be carbonized was about 40g of 6 pieces of GFRP cut materials roughly crushed into sizes of about 30 to 40 mm.
Similarly to the experiment 1, the specimen was immersed into the XSP, and pulled out after 2 to 3 minutes, followed by combusting and carbonizing by the above used burner. Although the direct irradiating time by burner was different depending on the volume of the specimen, in case of 40g of specimen, the time of 3 minutes also provided glass fibers, which were in short fibrous strip shapes having lengths of 2 to 5 mm±, and which were carbonized near surface layers thereof by (pyrolytic) carbons pyrolytically decomposed to possess vitreous luster.
It is assumed that each tissue (roving cloth/chopped strand mat) which had a cross section including glass fibers and which was obtained by roughly crushing the GFRP to be carbonized, was permeated, near its surface layer, with a sugar component and a metal hydrate, and carbons were immobilized to surface layers of glass fibers by heating. Fixated to and amalgamated with the surface layers of glass fibers were vitreous carbons of an unsaturated polyester resin as a thermosetting resin.
As apparent from this experiment, the method is extremely effective one as an appropriate disposing method of scrapped ships, septic tanks, unit baths, and the like made of GFRP materials, for which no effective measures have been found to dispose of them.
Further, the heat-curable carbon material having a unique structure to be obtained by this carbonizing method, is a high-temperature oxidation resistant vitreous carbon which is far superior to graphite materials insofar as in an oxygen atmosphere.

### Example 16:

Experiment 3: As a material to be carbonized, a simple substance of glass fiber was selected as a specimen.
An appropriate amount of glass fibers was placed onto an aluminum plate, and an appropriate amount of XSP was added thereto, followed by stirring by a spatula for acclimation.
By this operation for stirring the glass fibers, the fiber tissues were loosened, and swollen a little. This was caused in about 20 seconds.
The liquid was immediately boiled by an operation to conduct irradiation by burner similarly to the above, and carbonized surficial layers of the fibers were formed sequentially from those sites of the surface layers which were contacted with the flame, just in about 4 seconds.
The carbonized glass fiber substances obtained by this operation included carbons in the states keeping fibrous forms where a surface gloss was slightly observed, and the carbonized glass fiber substances had been converted into glass fibers having surface layers carrying carbons fixated thereto. The glass fibers were never melted, in the course of this carbonization.
The glass fibers obtained by this operation solved a skin trouble such as prickling and itchy feeling of a skin, which feeling was specific to typical glass fibers.

### Example 17:

Experiment 4: As a specimen to be carbonized, a synthetic xonotlite was selected which was problematic in fiber flying.
20g of coarse and small pieces of synthetic xonotlite: 50g of XSP were added to each other on an aluminum plate, followed by mixing.
The latter solution satisfactorily permeated through the xonotlite and was fixated thereto.
The specimen was fully carbonized by irradiation for a short time of about 7 minutes, i.e., by an operation to conduct irradiation by a burner in the same manner as the above.
The obtained carbide had a weight of 26.3g (carbonization yield of 37.57%).
Although the carbides just after the firing had lost fibrous shapes and were in a state that approximately spherical fine particles of 100 µm± and coarse particles of 1 to 1.5 mm were mixed, it was possible to readily granulate the carbides into sizes of about 50 µm by a rotational pressure of a roll or the like.

### Example 18:

The present invention will be explained hereinafter with reference to an embodiment in case of flyable asbestos.
50 parts of flyable asbestos: 15 parts of XSP: 35 parts of dispersion X were all mixed with one another sufficiently.
The mixture in a wet state was directly and thinly spread out, and irradiated by a flame at 1,200°C by a simple burner. The mixture to be treated was agitated at intervals, and carbonized at all in about 20 minutes. The resultant carbides had shapes of coarse particles of 3 to 5 mm±. They were gradually turned into fine particles by conducting continuous irradiation.

### Example 19:

The present invention will be explained hereinafter with reference to another embodiment in case of flyable asbestos.
45 parts of flyable asbestos: 35 parts of dispersion X: 20 parts of carbonizing A agent were all mixed with one another sufficiently, followed by drying.
At a water content percentage of 15%±, the mixture was subjected to irradiation of flame, while applying thereto the same stirring operation as the above. The mixture exhibited a tendency that the carbonizing speed was increased as the mixture was spread more flatly, and the irradiating time leading to carbonization was about 12 minutes, which time was shorter than the above.

In case of an asbestos fabric, it was required to sufficiently permeate a treatment agent therethrough, because the fabric was dense and strongly consolidated. However, in case of flyable fibers, the treatment agent was readily permeated therethrough and fixated thereto. After permeation and fixation, appropriate drying also shortened a treatment time for carbonization. Further, since asbestos fibers were fixed even when dried, they were safe without flying off.

### Example 20:

The present invention will be explained hereinafter with reference to an embodiment in case of GFRP.
40 parts of roughly crushed GFRP substances: 55 parts of dispersion X: 5 parts of XSP were all agitated sufficiently, to wet the whole of the GFRP specimen with the treatment liquid.
20 minutes after the stirring operation, a flame was irradiated in the same manner as the above. Although the specimen was temporarily ignited just before termination of the operation, the specimen was fully carbonized without incineration. The carbonization yield was 33%± (together with flying loss). Although the obtained initial carbons were in strip shapes, carbon particles of 1 mm± and glass fibers were obtained by an applying operation of rotational pressure by a roller, the glass fibers having surface layers carrying carbons fixated thereto.

### Example 21:

The present invention will be explained hereinafter with reference to an embodiment in case of short glass fibers (E glass short fibers).
50 parts of short glass fibers: 50 parts of XSP were all agitated sufficiently, and thinly coated onto and spread over a pan bottom.
Carbons were fixated to surface layers of the glass fibers, by flame irradiation for 4 minutes. The yield of carbonization was as high as 57.5%.
Although conventional glass fibers had prickling and itchy feeling, the obtained glass fibers formed with surficial carbon layers did not stimulate a skin, were easy to handle, and also possessed an inherent and specific heat resistance.

### Example 22:

The present invention will be explained hereinafter with reference to an embodiment in case of synthetic xonotlite.
Although 15.5 parts of synthetic xonotlite fragments: 85.5 parts of XSP were mixed with each other, the latter was extremely sufficiently absorbed into the former, so that the former was further fragmented and subjected to flame irradiation. Although fire sparks were spattered during flame contact, the mixture was carbonized in about 15 minutes. The carbonization yield was 23%±.

As a knowledge obtained from the many experiment results, it was revealed that even inorganic compounds containing no carbons can be carbonized by an operation to cause them to absorb organic carbon compounds followed by firing.
Various wastes are conceivable and utilizable which contain organic carbons, and it is possible to expect a further cost down and effective utilization of waste resources (tests have been performed), by exemplarily utilizing: fruits to be disposed of as a result of fruit sorting; squeezed fruits after extraction of juices therefrom; squeezed grapes after extraction of juices therefrom for white wine; and leftover rices after rice cooking, as starch originated carbohydrates.

Hydrophobic substances among combustible hydrocarbon compounds can be carbonized, by forming, at surfaces of the hydrophobic substances, highly viscous coating layers (having oxygen shielding effect and being flame-resistant) containing a flame-resistant or incombustible inorganic substance mutually dissolved therein. Specifically, it is possible to blend an incombustible inorganic compound (such as a mineral powder, and inorganic flame retardant) in a water solution of starch, to attach the inorganic compound onto the hydrophobic surfaces of starch. It is also possible to effectively utilize precipitated waste soils as soils left after water washing of crushed and selected stones (tests therefor have been performed). Such mineral powders are also excellent in incombustibility and heat storage property, and is thus also effective as an early carbonization promoter upon firing.

In turn, it is possible to carbonize hygroscopic hydrocarbon compounds, carbohydrates, and the like, by an operation to cause the texture thereof to carry an incombustible substance therein, followed by firing.
For example, it is possible to carbonize foamed materials and the like each comprising a continuously foamed body called "sponge", without bringing about ash contents, by exemplary permeating and carrying operations of: a borax water having a high concentration of 30%; a mixture of a diammonium hydrogenphosphate 20% solution and an appropriate clay or waste soil; a PAC water solution; and the like.
By the same method, chaffs, degreased rice bran powders, shavings, and the like can also be made into materials excellent in heat resistance, as pyrolytically decomposed old carbons.

### Example 23:

### <Treating method of waste>

Sprayed onto a ceiling face carrying an asbestos comprising chrysotile (white asbestos) as a heat insulator having a thickness of 50 mm, was a water solution comprising 85kg of PAC ("PAC" manufactured by Oji Paper Company, Limited) and 15kg of water, to simultaneously peel the asbestos off the ceiling face. The peeled heat insulator was about 5,500kg in weight. The asbestos were never flown off, with facilitated curing of the ceiling face, and no problems were found at all for an operator.

Subsequently added to 40kg of the dismounted asbestos including the PAC water solution permeated therethrough, was a water solution comprising 10kg of water containing 10kg of saccharose dissolved therein, followed by sufficient mixing. The above operation to blend the water-soluble organic substance (saccharose) was conducted, not at the job site where the asbestos was located, but at a waste-treatment site after transporting the asbestos thereto.

The above obtained mixture was uniformly charged into a stainless vessel up to a thickness of about 15 mm, and fired within a transportable simple firing furnace (with infrared burner, set at a temperature of 800°C, using propane gas). The firing was conducted in air. The in-furnace thermometer indicated 800 to 870°C, and the surface temperature of the specimen was constantly 1,040 to 1,080°C, at time points of 3 to 5 minutes after the initiation of firing. Obtained 18 minutes after initiation of charging into the furnace, was a carbon/aluminum complex compound-coated inorganic compound structural body comprising fully black colored particles.

The asbestos fibers were converted into particulate shapes, by this firing. Further, the particles had rounded tip ends, without sharply shaped portions, so that the hazardousness of asbestos to be otherwise caused by such shapes was fully eliminated. The obtained carbon/aluminum complex compound-coated inorganic compound structural body contained silicon and magnesium in addition to much oxygen and aluminum, so that the structural body was further improved in heat resistance.

### Evaluation Example:

### <Evaluation of particle shape>

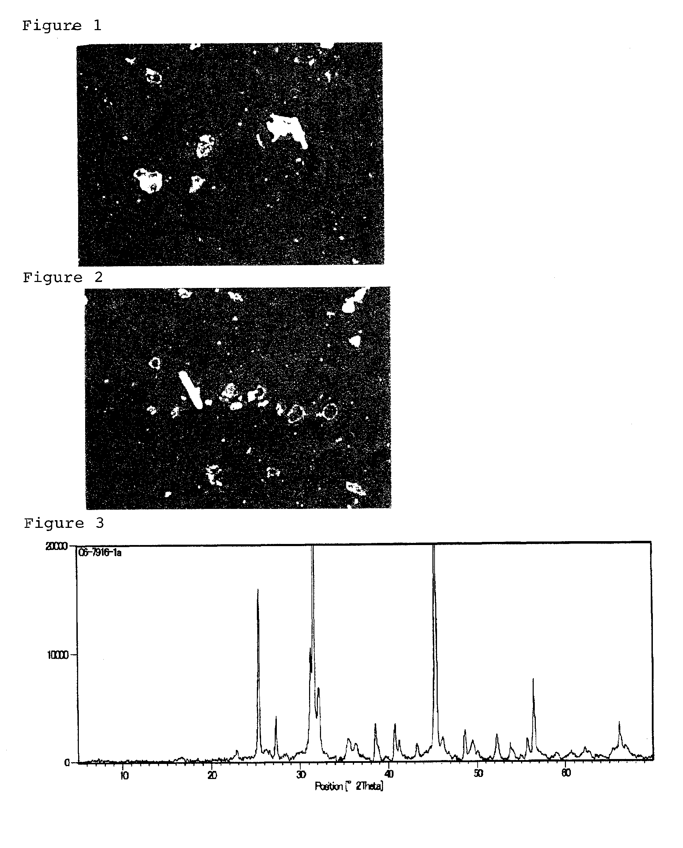

The carbon/aluminum complex compound-coated inorganic compound structural bodies obtained in Example 9 and Example 14 were observed by a phase contrast microscope set at a refractive index n_{D}^{25°C}=1.550, and at magnifications of 100X and 400X, respectively. The results are shown in FIG. 1 and FIG. 2, respectively. Needle-like shapes specific to asbestos are not seen at all.

### <Evaluation of crystal structure>

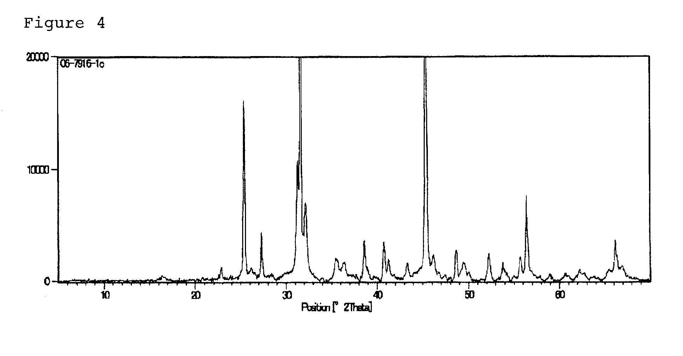

The carbon/aluminum complex compound-coated inorganic compound structural bodies obtained in Example 9 and Example 14 were measured in terms of X-ray diffractometry patterns, by a powder X-ray diffractometer using Cu-Kα line, respectively. The results are shown in FIG. 3 and FIG. 4, respectively. Those X-ray diffraction peaks are never found, which are specific to a chrysotile crystal, amosite crystal, and crocidolite crystal.

### <Evaluation of heat resistance>

### Evaluation method-1:

20g of a powder of carbon/aluminum complex compound, or 20g of a carbon/aluminum complex compound-coated inorganic compound structural body shaped into a substantial cube, each obtained from all the above Examples, was introduced into a muffle furnace substantially shielded from air, and heated at 1,300°C for 24 hours; but no changes were found in terms of an external appearance and a mass.

### Evaluation method-2:

20g of a powder of carbon/aluminum complex compound, or 20g of a carbon/aluminum complex compound-coated inorganic compound structural body shaped into a substantial cube, each obtained from all the above Examples, was heated in an electric furnace in the presence of air at 1,350°C for 1 hour; but no changes were found in terms of an external appearance and a mass.

### Evaluation method-3:

20g of a powder of carbon/aluminum complex compound, or 20g of a carbon/aluminum complex compound-coated inorganic compound structural body shaped into a substantial cube, each obtained from all the above Examples, was heated at 1,800°C for 30 minutes by a GOX; but no changes were found in terms of an external appearance and a mass.

### <Evaluation of flame resistance>

### Evaluation method-1:

The carbon/aluminum complex compound, or carbon/aluminum complex compound-coated inorganic compound structural body, each obtained from all the above Examples, was pressure molded into a molded body of 5 mm×5 mmx50 mm according to a usual manner, and the molded body was contacted, at its tip end, with a flame using butane as a combustion gas, for 60 seconds; but the molded body was not ignited. Further, each molded body was not melted, and was smokeless in nature.

### Evaluation method-2:

The carbon/aluminum complex compound, or carbon/aluminum complex compound-coated inorganic compound structural body, each obtained from all the above Examples, was pressure molded into a molded body of 5 mm×5 mmx50 mm according to a usual manner, and the molded body was subjected to a flame resistance test UL94; and all molded bodies passed a certified vertical combustion test standard UL94 V-0.

### <Evaluation of electroconductivity>

The carbon/aluminum complex compound, or carbon/aluminum complex compound-coated inorganic compound structural body, each obtained from all the above Examples and left in a powdery state, was charged into a pipe made of acrylic resin of 7 mmφ, and 200 mm length. Each specimen was tapped five times from a height of 2cm, followed by application of a DC voltage between the top and the bottom of the specimen charged in the pipe, to perform measurement of an electric current value at 20°C. All the rod-like test pieces lightly charged in the pipes each had a specific resistance of 10⁻⁶Ω·cm or less.

### <Evaluation of chemical resistance>

Each 10g specimen of the carbon/aluminum complex compound, or carbon/aluminum complex compound-coated inorganic compound structural body, obtained from each of all the Examples, were introduced into flasks, respectively, and 1N (normality) dilute sulfuric acid, 5 mass% sodium hydroxide, and acetone each in an amount of 100g were added into the specimens, respectively, followed by standing still at 20°C, to observe presence or absence of chemical reactions by visual inspection. No changes were found for all specimens, and chemical reactions were not progressed.

As understood from the above results, the "carbon/aluminum complex compound" or "carbon/aluminum complex compound-coated inorganic compound structural body" of the present invention obtained in the above Examples were all excellent in heat resistance, flame resistance, electroconductivity, and chemical resistance.

### INDUSTRIAL APPLICABILITY

Since the "carbon/aluminum complex compound" and "carbon/aluminum complex compound-coated inorganic compound structural body" of the present invention are excellent in heat resistance, flame resistance, electroconductivity, and chemical resistance, they are widely utilizable as electromagnetic wave shields, electroconductive fillers, incombustible carbons, incombustible carbon blacks, incombustible refractory construction materials, organic metal alternatives, activated carbons, harmful-substance adsorbents, molecular sieves, antifriction materials, ultraviolet preventive materials, pigments, C/C composite ultra-heat-resistant fillers, rubber reinforcing materials, asphalt heat resistance improvers, soil conditioners, and the like. Further, the treating method of waste of the present invention is free of flying off of toxic/hazardous particles during the treatment, and the resultant products can also be effectively utilized to reduce a total cost of waste treatments, so that the treating method can be widely utilized in the above enumerated fields.

The present application is based on a Japanese patent application No. 2007-153344 filed on May 14, 2007, which is hereby incorporated by reference herein in its entirety as the disclosure of this specification of the present invention.

## Claims

1. A carbon/aluminum complex compound **characterized in that** the carbon/aluminum complex compound is produced by firing a water solution containing a polyaluminum chloride and an organic substance at a temperature of 260°C to 2,800°C.

2. The carbon/aluminum complex compound of claim 1, wherein the water solution further contains one or more kinds of substances selected from a group consisting of carbon particles, carbon source particles, clay mineral particles, and borax.

3. The carbon/aluminum complex compound of claim 1, wherein the organic substance is a water-soluble organic substance.

4. The carbon/aluminum complex compound of claim 3, wherein the water-soluble organic substance is a saccharide.

5. The carbon/aluminum complex compound of claim 1, wherein the water solution further contains a (hydrogen)phosphate or (bi)carbonate.

6. A carbon/aluminum complex compound-coated inorganic compound structural body **characterized in that** the carbon/aluminum complex compound-coated inorganic compound structural body is produced by impregnating a water solution containing a polyaluminum chloride and an organic substance, through inorganic compound particles or through a composite containing inorganic compound particles, and by firing the impregnated matter at a temperature of 260°C to 2,800°C.

7. The carbon/aluminum complex compound-coated inorganic compound structural body of claim 6, wherein the inorganic compound particles are needle-like inorganic compounds, respectively.

8. The carbon/aluminum complex compound-coated inorganic compound structural body of claim 7, wherein the needle-like inorganic compounds are asbestos, synthetic xonotlite, or glass fibers.

9. The carbon/aluminum complex compound-coated inorganic compound structural body of claim 6, wherein the composite is contained in a waste.

10. The carbon/aluminum complex compound-coated inorganic compound structural body of claim 6, wherein the organic substance is a water-soluble organic substance.

11. The carbon/aluminum complex compound-coated inorganic compound structural body of claim 10, wherein the water-soluble organic substance is a saccharide.

12. The carbon/aluminum complex compound-coated inorganic compound structural body of claim 6, wherein the water solution further contains a (hydrogen)phosphate or (bi)carbonate.

13. A treating method of waste, **characterized in that** the method comprises the steps of:
peeling off a waste containing needle-like inorganic compounds while spraying a water solution containing a polyaluminum chloride onto and through the waste;
adding an organic substance into the sprayedly peeled matter; and
subsequently firing the resultant matter at a temperature of 260°C to 2,800°C.

14. The treating method of waste of claim 13, wherein the organic substance is a water-soluble organic substance.

15. The treating method of waste of claim 14, wherein the water-soluble organic substance is a saccharide.

16. A heat-resistant composition **characterized in that** the heat-resistant composition contains the carbon/aluminum complex compound of any one of claims 1 through 5.

17. The heat-resistant composition **characterized in that** the heat-resistant composition contains the carbon/aluminum complex compound-coated inorganic compound structural body of any one of claims 6 through 12.

18. A mineral fiber carbonizing method **characterized in that** the method comprises the steps of: permeating a polyaluminum chloride and an organic carbon compound such as a glucide solution through mineral fibers, to fixate the former to the latter; and firing the resultant matter.

19. An inorganic compound carbonizing method **characterized in that** the method comprises the steps of: permeating, a mixture of an organic carbon compound such as a sugar component with a PAC and a fireproof agent such as borax blended in the organic carbon compound, through inorganic particles, to fixate the mixture thereto; and firing the resultant matter.

20. A method for carbonizing a hydrocarbon compound such as plastics **characterized in that** the method comprises the steps of: coating a treatment agent comprising a highly viscous hydrocarbon compound water solution mixed with a flame retardant and a fireproof agent, onto a surface layer of a hydrophobic plastic material to shield it from oxygen; and firing and carbonizing the resultant matter.
